# EUROPÄISCHE PATENTANMELDUNG

(11) **EP 3 208 045 A1**
(43) Veröffentlichungstag der Anmeldung: **23.08.2017**
(21) Anmeldenummer: 16156628.6
(22) Anmeldetag: 22.02.2016
(51) Int. Cl.: B25B 21/02, B25B 23/00, F16B 21/12

(54) **WERKZEUGVERRIEGELUNG, SCHLAGSCHRAUBER UND STECKNUSS**

(71) Anmelder: HILTI Aktiengesellschaft, 9494 Schaan (LI)
(72) Erfinder: Funk, Alexander, 86830 Schwabmünchen (DE)
(74) Vertreter: Hilti Aktiengesellschaft Corporate Intellectual Property

(57) **Zusammenfassung**

Eine Werkzeugverriegelung zum Verriegeln einer Stecknuss 18 an einem Schlagschrauber 1 hat eine Kreisbogen-förmige Klammer 26, die einen Winkel 27 zwischen 270 Grad und 300 Grad umschließt. Ein Splint 24 ist mit einem Ende 33 an der Klammer 26 mittig angeordnet. Die Klammer 26 und der Splint 24 sind monolithisch aus einem Kunststoff gebildet.

## Beschreibung

### GEBIET DER ERFINDUNG

Die vorliegende Erfindung betrifft eine Werkzeugverriegelung zum Verriegeln einer Stecknuss an einem Schlagschrauber, einen Schlagschrauber und eine Stecknuss.

Schlagschrauber können mit wechselbaren Stecknüssen für verschieden große Schraubenköpfe verwendet werden. Die Stecknüsse werden über einen Stahlsplint an dem Schlagschrauber gesichert. Der Stahlsplint wird durch einen Gummiring in Position gehalten. Das Wechseln und Sichern der Stecknüsse ist mit Aufwand verbunden.

### OFFENBARUNG DER ERFINDUNG

Die erfindungsgemäße Werkzeugverriegelung zum Verriegeln einer Stecknuss an einem Schlagschrauber hat eine Kreisbogen-förmige Klammer, die einen Winkel zwischen 270 Grad und 300 Grad umschließt. Ein Splint ist mit einem Ende an der Klammer mittig angeordnet. Die Klammer und der Splint sind monolithisch aus einem Kunststoff gebildet.

Der Splint kann zylindrisch mit einem konstanten ersten Querschnitt sein und die Klammer kann entlang ihres kreisbogen-förmigen Umfangs einen konstanten zweiten Querschnitt aufweisen, wobei eine Fläche des zweiten Querschnitts zwischen 75 % und 125 % der Fläche des ersten Querschnitts beträgt.

Ein erfindungsgemäßer Schlagschrauber hat eine Abtriebsspindel auf einer Arbeitsachse, ein Schlagwerk zum Ausüben von Schlägen in einer Drehrichtung um die Arbeitsachse, eine Stecknuss, welche auf die Abtriebsspindel aufgeschoben ist. Die Stecknuss hat eine Nut, welche um die Arbeitsachse verläuft. Die Stecknuss hat eine erste Bohrung, welche durch die Nut und senkrecht zu der Arbeitsachse verläuft. Eine zweite Bohrung verläuft durch die Abtriebsspindel, wobei die erste Bohrung und die zweite Bohrung auf einer Linie liegen. Die erfindungsgemäße Werkzeugverriegelung liegt mit dem Splint in den beiden Bohrungen, und der Klammer in der Nut.

Eine Stecknuss hat einen auf einer Achse angeordnetes Maul zum Aufnehmen eines sechskantigen Schraubenkopfs oder einer sechskantigen Schraubenmutter, eine auf der Achse angeordnete Buchse mit einem hohlen quadratischen Querschnitt zum Aufnehmen eines quadratischen Werkzeughalters, eine ringförmige Nut, welche in der Außenfläche der Buchse um die Achse verläuft, eine Bohrung, welche senkrecht zu der Achse durch die Nut verläuft. Die erfindungsgemäße Werkzeugverriegelung liegt mit der Klammer in der Nut und steht mit dem Splint durch die Bohrung in den Hohlraum der Buchse vor.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Schlagschrauber
- Fig. 2: einen Schnitt in der Ebene II-II mit angeschnittener Werkzeugverriegelung
- Fig. 3: die Werkzeugverriegelung
- Fig. 4: einen Schnitt in der Ebene IV-IV

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

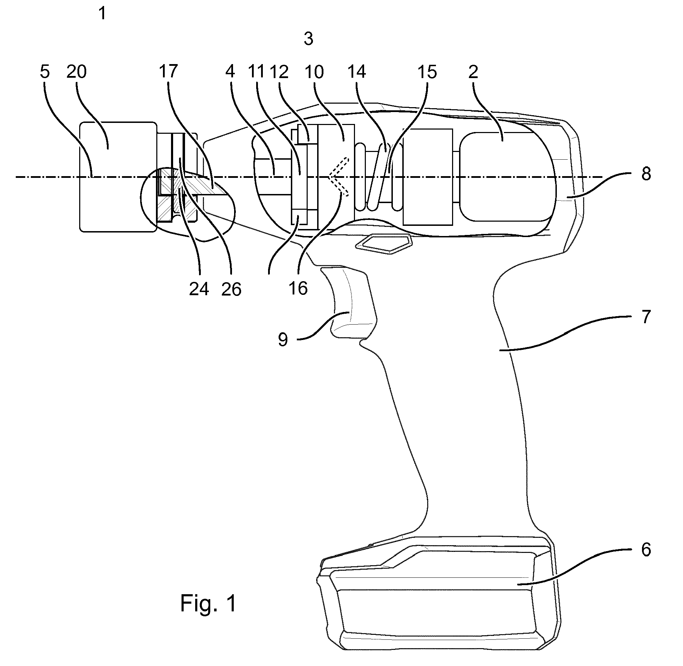

Fig. 1 zeigt einen beispielhaften Schlagschrauber **1.** Der Schlagschrauber **1** hat einen Elektromotor **2,** ein Schlagwerk **3** und einen Abtriebsspindel **4.** Das Schlagwerk **3** wird von dem Elektromotor **2** kontinuierlich angetrieben. Sobald ein rückwirkendes Drehmoment der Abtriebsspindel **4** einen Schwellwert überschreitet, übt das Schlagwerk **3** periodisch Drehimpulse mit einem zwar kurzzeitigen aber dafür mit einem sehr hohen Drehmoment auf die Abtriebsspindel **4** aus. Die Abtriebsspindel **4** dreht sich entsprechend kontinuierlich oder schrittweise um eine Arbeitsachse **5.** Der Elektromotor **2** kann über eine Batterie **6** gespeist oder netzgespeist sein.

Der Schlagschrauber **1** hat einen Handgriff **7,** mittels welchem der Anwender den Schlagschrauber **1** während des Betriebs halten und führen kann. Der Handgriff **7** kann steif oder mitttels Dämpfungselementen an einem Maschinengehäuse **8** befestigt sein. Der Elektromotor **2** und das Schlagwerk **3** sind in dem Maschinengehäuse **8** angeordnet. Der Elektromotor **2** ist mittels eines Tasters **9** ein- und ausschaltbar. Der Taster **9** ist beispielsweise unmittelbar an dem Handgriff **7** angeordnet und durch die den Handgriff umschließende Hand betätigbar.

Das beispielhafte Schlagwerk **3** hat einen Hammer **10** und einen Amboss **11.** Der Hammer **10** hat Klauen **12,** welche in Drehrichtung an Klauen **13** des Amboss **11** anliegen. Der Hammer **10** kann über die Klauen **12** ein kontinuierliches Drehmoment oder kurzzeitige Drehimpulse auf den Amboss **11** übertragen. Eine Schraubenfeder **14** spannt den Hammer **10** in Richtung zu dem Amboss **11** vor, wodurch der Hammer **10** mit dem Amboss **11** in Eingriff gehalten wird. Falls das Drehmoment den Schwellwert überschreitet, verschiebt sich der Hammer **10** soweit gegen die Kraft der Schraubenfeder, bis die Klauen **12** nicht mehr in Eingriff mit dem Amboss **11** sind. Der Elektromotor **2** kann den Hammer **10** in Drehrichtung beschleunigen, bis der Hammer **10** durch die Schraubenfeder **14** erneut in Eingriff mit dem Amboss **11** gezwungen wird. Die zwischenzeitlich gewonnene kinetische Energie überträgt der Hammer **10** in einem kurzen Impuls auf den Amboss **11.** Eine Ausgestaltung sieht vor, dass der Hammer **10** auf einer Antriebsspindel **15** entlang einer spiralförmigen Bahn **16** zwangsgeführt ist. Die Zwangsführung kann beispielsweise als spiralförmige Vertiefung in der Antriebsspindel **15** und einen in die Vertiefung eingreifenden Zapfen des Hammers **10** realisiert sein. Die Antriebsspindel **15** ist durch den Elektromotor 2 angetrieben.

Die Abtriebsspindel **4** steht aus dem Maschinengehäuse **8** hervor. Das herausstehende Ende bildet einen Werkzeughalter **17.** Der Werkzeughalter **17** hat einen quadratischen Querschnitt. Eine Stecknuss **18** oder ähnliches Werkzeug kann auf den Werkzeughalter **17** aufgesteckt werden. Die Stecknuss **18** hat eine Buchse **19** mit einem quadratischen hohlen Querschnitt, der in seinen Maßen im Wesentlichen dem Werkzeughalter **17** entspricht. Der Buchse **19** gegenüberliegend hat die Stecknuss **18** ein Maul **20** zum Aufnehmen einer sechskantigen Schraube oder einer sechskantigen Mutter.

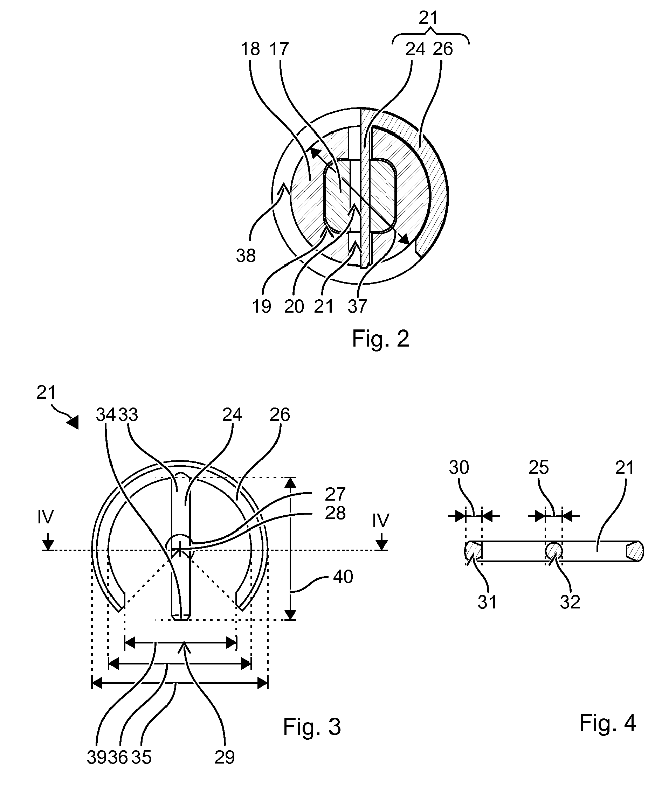

Die Stecknuss **18** wird mittels eines Werkzeugverriegelung **21** aus Kunststoff an der Abtriebsspindel **4** gesichert. Der Werkzeughalter **17** hat eine quer zur Arbeitsachse **5** verlaufende durchgehende Bohrung **22.** Die Stecknuss **18** hat ebenfalls eine quer zur Arbeitsachse **5** verlaufende Bohrung **23,** welche zumindest bis in den Hohlraum der Buchse **19** reicht. Die beiden Bohrungen **22, 23** liegen in einer Flucht. Der Werkzeugverriegelung **21** hat einen zylindrischen Splint **24,** welcher durch die Bohrung **23** der Stecknuss **18** in die Bohrung **22** des Werkzeughalters **17** einschiebbar ist. Die Werkzeugverriegelung **21** ist eingeschoben in die Bohrungen **22, 23** in Fig. 2 gezeigt, aus Gründen der besseren Darstellung ist nur die rechte Hälfte der Werkzeugverriegelung **21** dargestellt. Die gesamte Werkzeugverriegelung **21** ist in Fig. 3 gezeigt. Der Splint **24** hemmt eine axiale Bewegung der Stecknuss **18** gegenüber dem Werkzeughalter **17.** Der Splint **24** ist vorzugweise ein zylindrischer Stab mit einem gleichbleibenden Querschnitt **30bz.** Der beispielhafte Splint **24** hat einen Durchmesser **25** zwischen 4 mm und 6 mm.

Der Werkzeugverriegelung **21** hat ferner eine Kreisbogen-förmige Klammer **26,** welche die Stecknuss **18** teilweise umgreift. Die Klammer **26** umspannt einen (Mittelpunkts-) Winkel **27** zwischen 270 Grad und 300 Grad um den Mittelpunkt **28** der Klammer **26,** welcher bei montierter Werkzeugverriegelung **21** mit der Arbeitsachse **5** zusammenfällt. Die Klammer **26** hat somit eine Öffnung **29** mit einem Winkel zwischen 60 Grad und 90 Grad.

Die Klammer **26** hat eine Schnurstärke **30,** welche etwa dem Durchmesser **25** des Splints **24** entspricht. Die Klammer **26** kann einen längs des Umfangs konstanten Querschnitt **31** aufweisen. Eine Fläche des Querschnitts **31** ist vorzugsweise näherungsweise gleich der Fläche des Querschnitts **32** des Splints **24.** Beispielsweise unterscheiden sich die Flächen um weniger als 25 %. Die große Schnurstärke **30** bzw. der große Querschnitt **31** der Klammer **26** erhöhen die Steifigkeit der Klammer **26.** Der Querschnitt **31** der Klammer **26** kann trapezförmig sein, insbesondere kann sich der Querschnitt **31** in Richtung zu dem Mittelpunkt **28** hin verjüngen.

Der Splint **24** liegt innerhalb der Klammer **26.** Ein Ende **33** des Splints **24** geht in die Klammer **26** über, ein anderes Ende **34** des Splints **24** weist auf die Öffnung **29** zu. Der Splint **24** liegt auf der Symmetrieachse der Klammer **26,** wodurch ein Teilbogen der Klammer **26** auf der einen Seite des Splints **24** gleich groß wie ein anderer Teilbogen der Klammer **26** auf der anderen Seite des Splints **24** ist. Der Splint **24** ist vorzugsweise kürzer als ein Außendurchmesser **35** der Klammer **26.** Das andere Ende **34** des Splints **24** liegt somit innerhalb des von der Klammer **26** beschriebenen Kreises.

Die Klammer **26** liegt vorzugsweise bündig an der Stecknuss **18** an. Ein Innendurchmesser **36** der Klammer **26** entspricht daher vorzugsweise in etwa dem Außendurchmesser **37** der Stecknuss **18** im Bereich der Bohrung **23.** Bei der bespielhaften Stecknuss **18** ist eine umlaufende Nut **38** vorgesehen. Die Nut **38** verläuft auf der Außenseite um die Buchse **19** herum. Die Klammer **26** liegt in der Nut **38.** Die Bohrung **23** beginnt an dem Boden der Nut **38** und öffnet sich in den Hohlraum der Buchse **19.** Der Innendurchmesser **36** der Klammer **26** entspricht dem Außendurchmesser an der Stecknuss **18** an dem Boden. Die Klammer **26** muss zum Aufstecken und Abziehen von der Stecknuss **18** radial aufgespreizt werden. Die Öffnung **29** muss dabei zwischen 15 % und 30 % ihrer Breite **39** aufgedehnt werden.

Der Werkzeugverriegelung **21** ist vollständig aus einem Thermoplast gebildet, insbesondere eigenen sich Acrylnitril-Buatdien-Styrol (ABS), Polyamide (PA), Polyacytat (PLA), Polyethylen (PE), Polypropylen (PP). Vorzugsweise enthält der Werkzeugverriegelung **21** keinen Kunststoff, welcher der Gruppe der Elastomere zugeordnet ist, wie z.B. Kautschuk. Elastomere können bei niedrigen Temperaturen glasartig werden und dann aufgrund der wiederholten Schläge des Schlagwerks brechen.

Der Werkzeugverriegelung **21** ist einteilig oder monolithisch gefertigt. In einem bevorzugten Herstellungsverfahren werden der Splint **24** und die Klammer **26** in einem Verfahrensschritt gespritzt. Der Splint **24** und die Klammer **26** sind dadurch ohne Fügezone miteinander verbunden. Ein Verkleben oder Verschweißen führt zu einer Grenzschicht, welche potentiell zu einer Schwachstelle führt. Der Splint **24** könnte sich von der Klammer **26** lösen und dann aus der Bohrung **23** herausfallen. Dies gilt analog bei einer mechanischen Fügezone, wie z.B. beim Vernieten oder Verschrauben.

## Patentansprüche

1. Werkzeugverriegelung zum Verriegeln einer Stecknuss (18) an einem Schlagschrauber (1) bestehend aus:
einer Kreisbogen-förmigen Klammer (26), die einen Winkel (27) zwischen 270 Grad und 300 Grad umschließt,
einem Splint (24), der mit einem Ende (33) an der Klammer (26) mittig angeordnet ist, wobei die Klammer (26) und der Splint (24) monolithisch, aus einem Kunststoff gebildet sind.

2. Werkzeugverriegelung nach Anspruch 1, **dadurch gekennzeichnet, dass** der Kunststoff ein Thermoplast ist

3. Werkzeugverriegelung (21) nach Anspruch 1 oder 2, **dadurch gekennzeichnet, dass** der Splint (24) zylindrisch mit einem konstanten ersten Querschnitt und die Klammer (26) entlang ihres kreisbogen-förmigen Umfangs einen konstanten zweiten Querschnitt aufweist, wobei eine Fläche des zweiten Querschnitts zwischen 75 % und 125 % der Fläche des ersten Querschnitts beträgt.

4. Werkzeugverriegelung (21) nach einem der vorhergehenden Ansprüche, **dadurch gekennzeichnet, dass** die Klammer (26) entlang ihres kreisbogen-förmigen Umfangs einen konstanten Querschnitt aufweist, wobei sich der Querschnitt in Richtung zu einem Mittelpunkt (28) der Werkzeugverriegelung (21) hin verjüngt.

5. Werkzeugverriegelung (21) nach einem der vorhergehenden Ansprüche, **dadurch gekennzeichnet, dass** eine Länge (40) des Splints (24) kürzer als ein Durchmesser (25) der Klammer (26) ist.

6. Schlagschrauber (1) mit
einer Abtriebsspindel (4) auf einer Arbeitsachse (5),
einem Schlagwerk (3) zum Ausüben von Schlägen in einer Drehrichtung um die Arbeitsachse (5),
einer Stecknuss (18), welche auf die Abtriebsspindel (4) aufgeschoben ist,
einer Nut (38) in der Stecknuss (18), welche um die Arbeitsachse (5) verläuft,
einer ersten Bohrung (23) durch die Stecknuss (18), welche durch die Nut (38) und senkrecht zu der Arbeitsachse (5) verläuft,
einer zweiten Bohrung (22) durch die Abtriebsspindel (4), wobei die erste Bohrung (23) und die zweite Bohrung (22) auf einer Linie liegen,
einer Werkzeugverriegelung (21) nach einem der vorhergehenden Ansprüche, wobei der Splint (24) in den beiden Bohrungen (22, 23) liegt und die Klammer (26) in der Nut (38) liegt.

7. Stecknuss (18) mit
einem auf einer Achse angeordnetem Maul (20) zum Aufnehmen eines sechskantigen Schraubenkopfs oder einer sechskantigen Schraubenmutter,
einer auf der Achse angeordneten Buchse (19) mit einem hohlen quadratischen Querschnitt (31) zum Aufnehmen eines quadratischen Werkzeughalters (17),
einer ringförmigen Nut (38), welche in der Außenfläche der Buchse (19) um die Achse verläuft,
einer Bohrung (23), welche senkrecht zu der Achse durch die Nut (38) verläuft,
einer Werkzeugverriegelung (21) nach einem der Ansprüche 1 bis 5, wobei die Klammer (26) in der Nut (38) liegt und der Splint (24) durch die Bohrung (23) in den Hohlraum der Buchse (19) vorsteht.
